# EUROPEAN PATENT APPLICATION

(11) **EP 4 614 716 A1**
(43) Date of publication of application: **10.09.2025**
(21) Application number: 23903908.4
(22) Date of filing: 08.12.2023
(51) Int. Cl.: H01M 50/54, H01M 50/533, H01M 50/536

(54) **ELECTRODE ASSEMBLY SET AND SECONDARY BATTERY COMPRISING SAME**

(30) Priority: 12.12.2022 KR 20220172746; 30.10.2023 KR 20230147022
(71) Applicant: LG Energy Solution, Ltd., Seoul 07335 (KR)
(72) Inventor: KIM, Jin Hyung, Daejeon 34122 (KR); HWANG, Soo Ji, Daejeon 34122 (KR); KIM, Mi Na, Daejeon 34122 (KR)
(74) Representative: Plasseraud IP
(86) International application number: PCT/KR2023/020259
(87) International publication number: WO 2024/128705

(57) **Abstract**

The present invention relates to an electrode assembly set including a connecting part that electrically connects a plurality of electrode assemblies inside a pouch to each other, and is movable according to a change in volume of each of the electrode assemblies to be capable of being prevented from being damaged.

The electrode assembly set according to an embodiment of the present invention may include a plurality of electrode assemblies which include a plurality of negative electrodes, positive electrode, and separators, and a connecting part which electrically connects the electrode assemblies to each other, wherein the connecting part includes a plurality of folding parts, each of which has a portion folded at a predetermined angle, and the predetermined angle is changed so as to allow the electrode assembly to move.

## Description

### TECHNICAL FIELD

### CROSS-REFERENCE TO RELATED APPLICATION

The present application claims the benefit of the priority of Korean Patent Application Nos. 10-2022-0172746, filed on December 12, 2022, and 10-2023-0147022, filed on October 30, 2023, which are hereby incorporated by reference in their entirety.

### TECHNICAL FIELD

The present invention relates to an electrode assembly set and a secondary battery including the same, and more particularly, to an electrode assembly set used in manufacture of a secondary battery capable of being charged and discharged, and a secondary battery including the electrode assembly set.

### BACKGROUND ART

Recently, prices of energy sources rise due to depletion of fossil fuels, interests about environmental pollution are amplified, and a need for eco-friendly alternative energy sources is indispensable for life in the future. Accordingly, research continues on various power generation technologies using sunlight, wind power, tidal power, and the like, and there is also a continuing great interest in power storage systems, such as batteries, for more efficiently using electrical energy generated through the technologies.

Moreover, as the technical development of and a demand for mobile electronic devices and electric vehicles using batteries increase, a demand for batteries as energy sources rapidly increases. Accordingly, much research is conducted on batteries that can meet the various needs.

Batteries that store electrical energy may be generally classified into primary batteries and secondary batteries. While the primary batteries are disposable consumable batteries, the secondary batteries are rechargeable batteries manufactured using a material in which a redox process between current and a substance is repeatable. That is, when a reduction reaction is performed on the material by the current, a power supply is charged, and when an oxidation reaction is performed on the material, the power supply is discharged. This charging-discharging is repeatedly performed to generate electricity.

According to the shape, the secondary batteries may be classified into a cylindrical type cell, a pouch type cell, a prismatic type cell, and the like. Among these cells, the pouch type cell may include an electrode assembly having a shape in which a positive electrode, a negative electrode, a separator, and the like are stacked inside a pouch.

According to the related art, one electrode assembly is disposed inside a pouch, but a secondary battery, in which a plurality of electrode assemblies are disposed inside a pouch for improvement in energy density, has appeared. As the number of the electrode assemblies increases as above, problems with arrangement between the electrode assemblies and methods for electrically connecting the plurality of electrode assemblies to each other have occurred.

Therefore, there is a need for an electrode assembly set, in which a plurality of electrode assemblies are effectively disposed and which includes a component for electrically connecting the plurality of electrode assemblies to each other, and a secondary battery including the electrode assembly set.

### DISCLOSURE OF THE INVENTION

### TECHNICAL PROBLEM

An object of the present invention is to provide an electrode assembly set including a connecting part, in which a damage is minimized even when an increase/decrease in volume of an electrode assembly occurs during charging or discharging of a secondary battery, and which is capable of effectively electrically connecting a plurality of electrode assemblies, and a secondary battery including the electrode assembly set.

### TECHNICAL SOLUTION

An electrode assembly set according to an embodiment of the present invention may include a plurality of electrode assemblies including a plurality of negative electrodes, positive electrode, and separators, and a connecting part which electrically connects the electrode assemblies to each other, wherein the connecting part includes a plurality of folding parts, each of which has a portion folded at a predetermined angle, and the predetermined angle is changed so as to allow the electrode assemblies to move.

The electrode assembly set may further include an electrode lead electrically connected to the electrode assemblies through the connecting part to extend in a direction that is away from the electrode assemblies.

The connecting part may include a lead connecting part to which the electrode lead is connected, a first folding part which connects an electrode tab of one electrode assembly to the lead connecting part, and a second folding part which connects an electrode tab of the other electrode assembly adjacent to the one electrode assembly to the lead connecting part, wherein each of the first folding part and the second folding part has a shape in which a portion thereof is folded.

The first folding part and the second folding part may be arranged in a point-symmetric shape with respect to the lead connecting part.

The electrode assembly set may further include a first folding part which connects an electrode tab of one electrode assembly to the electrode lead, and a second folding part which connects an electrode tab of the other electrode assembly adjacent to the one electrode assembly to the electrode lead, wherein each of the first folding part and the second folding part has a shape in which a portion thereof is folded.

The first folding part and the second folding part may be arranged in a point-symmetric shape with respect to the electrode lead.

At least one of the first folding part or the second folding part may further include a plurality of members which are connected to each other to form a specific angle, and a joint which is disposed between the plurality of members and is connected to the members adjacent thereto to aid in movement of the members.

The plurality of electrode assemblies may include a first electrode assembly, and a second electrode assembly disposed on one side of the first electrode assembly in a thickness direction, wherein, in the first electrode assembly, a first positive electrode tab protrudes from one side in a width direction of one end of the first electrode assembly, and a first negative electrode tab protrudes from the other side in a width direction of the other end, and, in the second electrode assembly, a second positive electrode tab protrudes from the other side in a width direction of one end of the second electrode assembly, and a second negative electrode tab protrudes from one side in a width direction of the other end.

The connecting part may include a negative electrode connecting part, which electrically connects the first negative electrode tab and the second negative electrode tab to each other, and a positive electrode connecting part which electrically connects the first positive electrode tab and the second positive electrode tab to each other.

The electrode assembly may be disposed so that a positive electrode tab protrudes from a central portion in a width direction of one end, and a negative electrode tab protrudes from a central portion in a width direction of the other end, and the connecting part may include a first folding part which is disposed at one side of a central portion based on a width direction of the electrode assembly, and a second folding part which is disposed at the other side of the central portion based on the width direction of the electrode assembly.

A secondary battery according to an embodiment of the present invention may include any one of the electrode assembly sets described above, and a battery case in which the electrode assembly set is accommodated.

In the connecting part, the predetermined angle may be changed so as to allow the electrode assembly to move in a thickness direction of the electrode assembly, and a width direction perpendicular to the thickness direction.

An electrode assembly set according to an embodiment of the present invention may include an electrode assembly unit, which includes a plurality of electrode assemblies, an electrode lead, which is disposed so as to overlap a virtual plane passing a center of the electrode assembly unit in a stacking direction of the electrode assemblies, and a connecting part which electrically connects each of the electrode assemblies and the electrode lead to each other, wherein the connecting part includes a plurality of folding parts, each of which has a portion folded at a predetermined angle, and the predetermined angle is changed so as to allow the electrode assembly to move.

### ADVANTAGEOUS EFFECTS

The electrode assembly set according to the embodiment of the present invention may include the plurality of electrode assemblies which include the plurality of negative electrodes, positive electrode, and separators, and the connecting part which electrically connects the electrode assemblies to each other. The connecting part may include the plurality of folding parts, each of which has the portion folded at the predetermined angle, and the predetermined angle may be changed so as to allow the movement of each of the electrode assemblies.

Accordingly, even when the plurality of electrode assemblies are disposed inside the battery case, the plurality of electrode assemblies may be capable of being electrically connected to each other.

In addition, as the connecting part is movable according to the change in volume of the electrode assembly, the connecting part may be prevented from being damaged.

That is, even when the swelling occurs according to the use of the secondary battery, the electrode tab and the connecting part may be prevented from being damaged.

In addition, the shape of the connecting part may be easily changed, and thus the connecting part may be applied to the secondary batteries having the various shapes.

In addition, the electrode tabs of the electrode assembly may be disposed to be spaced apart from each other to prevent the heat from being concentrated.

In addition, the position at which the electrode lead is disposed may be capable of being set by the connecting part to improve the efficiency of the process such as the pouch forming or sealing.

The effects according to the present invention are not limited by the contents described above, and more various effects are included in the present specification.

### BRIEF DESCRIPTION OF THE DRAWINGS

FIG. 1 is a schematic perspective view illustrating a secondary battery according to an embodiment of the present invention.
FIG. 2 is a perspective view of an electrode assembly set according to an embodiment of the present invention.
FIG. 3 is a plan view of an electrode assembly set according to an embodiment of the present invention.
FIG. 4 is a front view of an electrode assembly set according to an embodiment of the present invention.
FIG. 5 is a side view of a portion of an electrode assembly set according to an embodiment of the present invention.
FIG. 6 is a perspective view of an electrode assembly set according to another embodiment of the present invention.
FIG. 7 is a front view of an electrode assembly set according to another embodiment of the present invention.
FIG. 8 is a perspective view of an electrode assembly set according to still another embodiment of the present invention.
FIG. 9 is a front view of an electrode assembly set according to still another embodiment of the present invention.

### MODE FOR CARRYING OUT THE INVENTION

Hereinafter, preferred embodiments of the present invention will be described in detail with reference to the accompanying drawings to enable those skilled in the art to which the present invention pertains to easily carry out the present invention. The present invention may, however, be embodied in different forms and should not be construed as limited by the embodiments set forth herein.

The parts unrelated to the description, or the detailed descriptions of related well-known art that may unnecessarily obscure subject matters of the present invention, will be ruled out in order to clearly describe the present invention. Like reference numerals refer to like elements throughout the whole specification.

Moreover, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

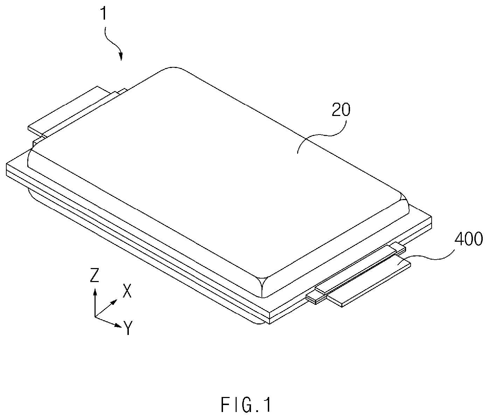

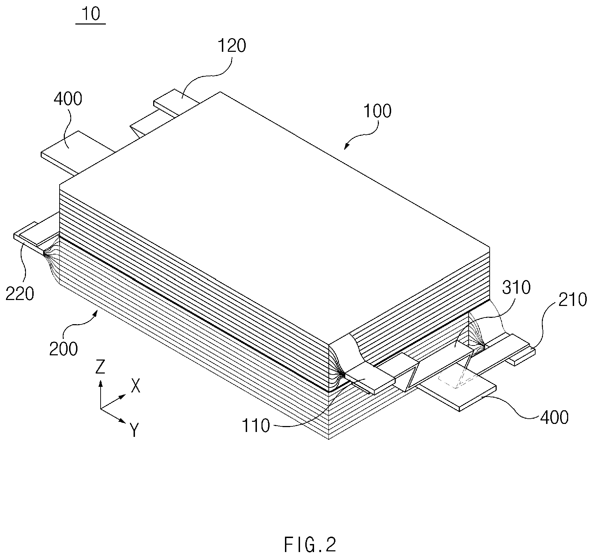

FIG. 1 is a schematic perspective view illustrating a secondary battery 1 according to an embodiment of the present invention. FIG. 2 is a perspective view of an electrode assembly set 10 according to an embodiment of the present invention.

The present invention provides the electrode assembly set 10 as an embodiment. The electrode assembly set 10 according to an embodiment of the present invention may be the electrode assembly set 10 included in the secondary battery 1. Specifically, the electrode assembly set 10 may be accommodated inside a battery case 20 during the manufacture of the secondary battery 1.

Referring to FIG. 1, the secondary battery 1 including the electrode assembly set 10 according to an embodiment of the present invention may have a shape in which a plurality of electrode assemblies are accommodated inside the battery case 20. For example, the secondary battery 1 may have a pouch-cell shape, and the battery case 20 may be a pouch. However, this is just an example, and the electrode assembly set 10 according to an embodiment of the present invention may be applied to secondary batteries having various shapes. That is, the electrode assembly set 10 may be accommodated in a case having various shapes.

The electrode assembly set 10 according to the present invention to be described may include the plurality of electrode assemblies. However, in an embodiment of the present invention, the electrode assembly set 10 including two electrode assemblies will be described as an example. That is, in the secondary battery 1 according to an embodiment of the present invention, the electrode assembly set 10 including the two electrode assemblies may be accommodated inside the battery case 20. In addition, an electrode lead 400 connected to the electrode assemblies may protrude to the outside of the battery case 20. When the secondary battery 1 is a pouch-type cell, as the electrode assembly set 10 includes two electrode assemblies, the battery case 20 may be a pouch including a cup part provided to be convex in each of both sides based on a thickness direction thereof.

Each of the electrode assemblies of the electrode assembly set 10 may include a plurality of negative electrodes, positive electrodes, and separators. For example, the electrode assembly may have a shape in which a plurality of negative electrodes, positive electrodes, and separators, each of which has a plate shape, are stacked on each other. In addition, the electrode assembly may have a jelly-roll shape in which a plurality of negative electrodes, positive electrodes, and separators, each of which is capable of wound, are wound.

As one example of a component for electrically connecting the plurality of electrode assemblies to each other, the electrode assembly set 10 according to an embodiment of the present invention may include a connecting part 300. The connecting part 300 may be electrically connected to each of the electrode assemblies. Here, the connecting part 300 may be made of a conductor that is a material that allows electricity flows therethrough.

Referring to FIG. 2, the connecting part 300 according to an embodiment of the present invention may include a plurality of folding parts for a change in shape thereof. Specifically, each of the folding parts of the connecting part 300 may be connected in a folded shape, and a shape thereof may be changed so that a folded angle is changed. Here, the folded angle may be changed so as to allow the electrode assembly to move. More specifically, the electrode assembly may be allowed to move in two directions by the connecting part 300. For example, the two directions may be a thickness direction (e.g., direction parallel to a Z axis) and a width direction (e.g., direction parallel to an X axis) of the electrode assembly. The width direction of the electrode assembly may mean a direction perpendicular to the thickness direction. To sum up, in the folding part of the connecting part 300, the folded angle may be changed so as to allow the electrode assembly to move in the thickness direction and the width direction of the electrode assembly.

As charging and discharging of the secondary battery 1 are repeated, a change in volume of the electrode assembly caused by a swelling phenomenon may occur. In this regard, as the shape of the folding part is changed so that the folded angle is changed, a shape of the connecting part 300 may be changed when the volume of the electrode assembly changes. Thus, even when the volume of the electrode assembly changes to change a distance between respective electrode tabs of the electrode assemblies, the shape of the connecting part 300 is also capable of being changed according to the changed distance. That is, in the electrode assembly set 10 according to an embodiment of the present invention, even when the swelling phenomenon according to an increase in time spent using the secondary battery 1 occurs, the shape of the connecting part 300 may be easily changed to minimize an impact applied to the connecting part 300. Accordingly, a damage to the connecting part 300 may be minimized, and lifetime of the secondary battery 1 may be increased. In addition, a damage to the electrode lead 400 to be described later may be prevented due to the change in shape of the connecting part 300.

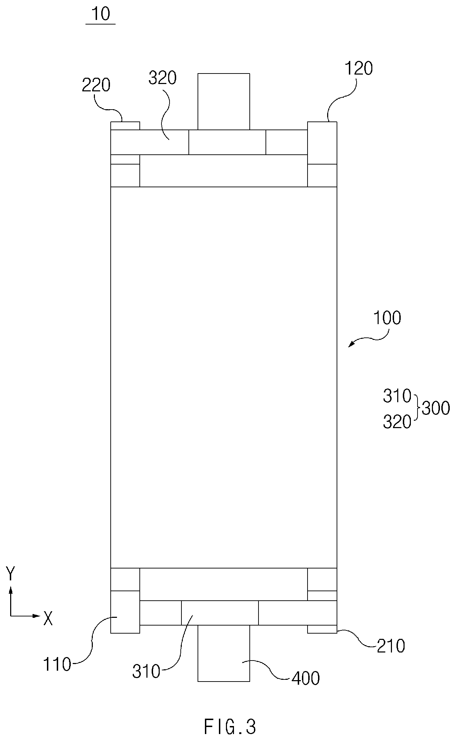

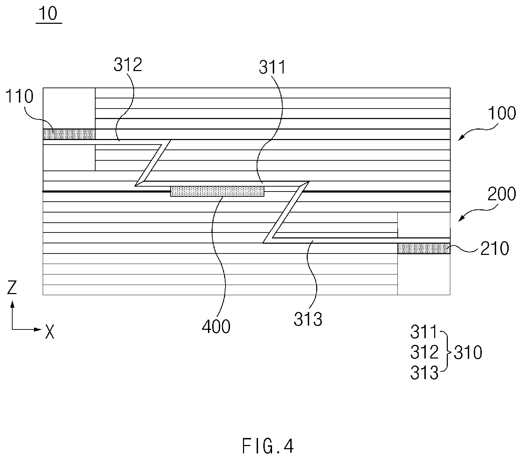

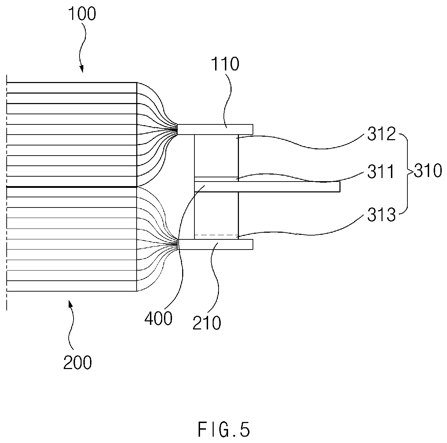

FIG. 3 is a plan view of an electrode assembly set 10 according to an embodiment of the present invention. FIG. 4 is a front view of the electrode assembly set 10 according to an embodiment of the present invention. In addition, FIG. 5 is a side view of the electrode assembly set 10 according to an embodiment of the present invention.

The electrode assembly set 10 according to an embodiment of the present invention may include a first electrode assembly 100 and a second electrode assembly 200. Here, the second electrode assembly 200 may be disposed on one side of the first electrode assembly 100 in a thickness direction, and the first electrode assembly 100 and the second electrode assembly 200 are stacked on each other. In addition, the first electrode assembly 100 and the second electrode assembly 200 may have approximately similar shapes so as to be easily accommodated inside the battery case 20.

As one example of a configuration for preventing heat from being concentrated due to heat generation, in the electrode assembly set 10 according to an embodiment of the present invention, the electrode tabs may be spaced apart from each other. Specifically, a positive electrode tab and a negative electrode tab of each of the electrode assemblies may protrude in opposite directions with respect to a full-length direction of the electrode assembly (e.g., direction parallel to a Y axis). In addition, the respective positive electrode tabs of the electrode assemblies may be disposed at opposite sides with respect to a full-width direction of the electrode assembly (e.g., direction parallel to the X axis), and the respective negative electrode tabs of the electrode assemblies may be disposed at opposite sides with respect to the full-width direction of the electrode assembly (e.g., direction parallel to the X axis).

Referring to FIG. 3, the first electrode assembly 100 may be disposed so that a first positive electrode tab 110 protrudes from one side in a width direction of one end of the first electrode assembly 100, and a first negative electrode tab 120 protrudes from the other side in a width direction of the other end. In addition, the second electrode assembly 200 may be disposed so that a second positive electrode tab 210 protrudes from the other side in a width direction of one end of the second electrode assembly 200, and a second negative electrode tab 220 protrudes from one side in a width direction of the other end. In FIG. 3, the first positive electrode tab 110 may be disposed on the lower left end, the second positive electrode tab 210 may be disposed on the lower right end, the second negative electrode tab 220 may be disposed on the upper left end, and the first negative electrode tab 110 may be disposed on the upper right end. In this case, the electrode assembly set 10 may be in a state in which the electrode tabs are spaced apart from each other even when viewed in any direction.

Although not illustrated in an embodiment of the present invention, other arrangement of the electrode tabs for preventing heat from being concentrated may be possible. For example, the first electrode assembly 100 may be disposed so that the first positive electrode tab 110 protrudes from the one side in the width direction of the one end, and the first negative electrode tab 120 protrudes from the one side in the width direction of the other end. In addition, the second electrode assembly 200 may be disposed so that the second positive electrode tab 210 protrudes from the other side in the width direction of the one end, and the second negative electrode tab 220 protrudes from the other side in the width direction of the other end. This arrangement may prevent heat generation from being concentrated in a specific portion.

As the secondary battery 1 is used, relatively more heat may be generated in the positive electrode tab and negative electrode tab that are electrode tabs. Here, when the respective positive electrode tab and negative electrode tab of the electrode assemblies are disposed to be spaced apart from each other, heat generation points may be scattered to prevent heat from being concentrated in a specific portion. Thus, the specific portion may be prevented from losing a function thereof or being physically damaged due to high-heat generation.

As an example of a component for electrically connecting the electrode tabs described above, the connecting part 300 may include a negative electrode connecting part 320 and a positive electrode connecting part 310. Referring to FIG. 3, the negative electrode connecting part 320 may electrically connect the first negative electrode tab 120 and the second negative electrode tab 220 to each other, and the positive electrode connecting part 310 may electrically connect the first positive electrode tab 110 and the second positive electrode tab 210 to each other. Specifically, the positive electrode connecting part 310 may be disposed on one end of the first electrode assembly 100 or the second electrode assembly 200, and the negative electrode connecting part 320 may be disposed on the other end of the first electrode assembly 100 or the second electrode assembly 200.

As one example of a component for an electrical connection with the outside, the electrode assembly set 10 may further include an electrode lead 400. The electrode lead 400 may be electrically connected to the electrode assemblies 100 and 200 through the connecting part 300. That is, the electrode lead 400 may be electrically connected to the positive electrode connecting part 310 or the negative electrode connecting part 320 to have a shape extending in a direction that is away from the electrode assemblies 100 and 200. Specifically, the electrode lead 400 may be a conductor having an approximately plate shape. The electrode lead 400 may connect the electrode assembly set 10, which is accommodated inside the battery case 20, to the outside to transmit electric energy of the secondary battery 1 to the outside.

As an example of a component for connection with the electrode lead 400, the positive electrode connecting part 310 or the negative electrode connecting part 320 may include a lead connecting part 311. In addition, the positive electrode connecting part 310 or the negative electrode connecting part 320 may include a first folding part 312 and a second folding part 313, each of which is connected to the lead connecting part 311.

Referring to FIGS. 4 and 5, the electrode lead 400 may be attached to the lead connecting part 311. For example, the electrode lead 400 may be attached to a top surface or a bottom surface of the lead connecting part 311.

The lead connecting part 311 may have an approximately plate shape, and be approximately a central portion of the connecting part 300. Specifically, the lead connecting part 311 may be disposed so that the electrode lead 400 is positioned at an approximately central portion in a stacking direction of the electrode assemblies. That is, due to the lead connecting part 311, the electrode lead 400 may be disposed so as to overlap a virtual plane passing a center of an electrode assembly unit in the stacking direction of the electrode assemblies. Here, the electrode assembly unit may mean a group including the first electrode assembly 100 and the second electrode assembly 200. If the number of the electrode assemblies increase, the electrode assembly unit may mean a group including all of the electrode assemblies. As the electrode assembly set 10 according to an embodiment of the present invention includes the two electrode assemblies 100 and 200, the electrode lead 400 may be disposed approximately between the first electrode assembly 100 and the second electrode assembly 200 in the stacking direction of the electrode assemblies.

When the electrode lead 400 is disposed at the approximately central portion in the stacking direction of the electrode assemblies, the electrode lead 400 may be disposed so as to have a certain distance from each of the positive electrode tab and the negative electrode tab. That is, heat generation points may be scattered in the electrode assembly set 10 so that heat is prevented from being concentrated in a specific portion. Thus, the specific portion of the electrode assembly set 10 may be prevented from losing a function thereof or being physically damaged due to high-heat generation.

In addition, when the battery case 20 including two cup parts accommodates the electrode assembly set 10, a molding depth of the cup part at each of both sides of the battery case 20 may be relatively decreased. Thus, efficiency of a process of molding the cup parts may be improved, and structural stability of the battery case 20 may be improved.

The first folding part 312 according to an embodiment of the present invention may connect an electrode tab of one electrode assembly and the lead connecting part 311 to each other. In addition, the second folding part 313 may connect an electrode tab of the other electrode assembly and the lead connecting part 311 to each other. Here, the other electrode assembly may mean an electrode assembly adjacent to the one electrode assembly. In addition, the electrode tab of the one electrode assembly may be the first positive electrode tab 110 or the first negative electrode tab 120 of the first electrode assembly 100 described above, and the electrode tab of the other electrode assembly may be the second positive electrode tab 210 or the second negative electrode tab 220 of the second electrode assembly 200 described above.

The positive electrode connecting part 310 will be described as follows as an example. The first folding part 312 may have one portion connected to the first positive electrode tab 110, and the other portion connected to the lead connecting part 311. Specifically, one end of the first folding part 312 may be connected to the first positive electrode tab 110, and the other end thereof may be connected to the lead connecting part 311. For example, the one end of the first folding part 312 may be attached to an upper portion or a lower portion of the first positive electrode tab 110. In addition, the second folding part 313 may have one portion connected to the second positive electrode tab 210, and the other portion connected to the lead connecting part 311. Specifically, one end of the second folding part 313 may be connected to the lead connecting part 311, and the other end thereof may be connected to the second positive electrode tab 210. For example, the other end of the second folding part 313 may be attached to an upper portion or a lower portion of the second positive electrode tab 210.

Each of the first folding part 312 and the second folding part 313 may have a shape in which a portion thereof is folded. That is, each of the first folding part 312 and the second folding part 313 may have an approximately plate shape in which the portion thereof is folded.

With regard to an arrangement relationship between the first folding part 312 and the second folding part 313, the first folding part 312 and the second folding part 313 may be arranged in an approximately point-symmetric shape with respect to the lead connecting part 311. When the first folding part 312 and the second folding part 313 are arranged in point symmetry with each other, in a case in which a shape of each of the first folding part 312 and the second folding part 313 is changed due to swelling of the electrode assembly, a structurally relatively stable change in shape be performed.

Hereinafter, a secondary battery 1 in which an electrode assembly set 10 according to an embodiment of the present invention is disposed inside a battery case 20 will be described.

As the electrode assembly set 10 inside the secondary battery 1 includes a plurality of electrode assemblies, the electrode assembly set 10 may include a plurality of electrode tabs disposed to be spaced apart from each other. Here, a negative electrode connecting part 320 or a positive electrode connecting part 310 may electrically connect negative electrode tabs or positive electrode tabs, which are disposed to be spaced apart from each other, to each other, respectively.

In the secondary battery 1, a volume of a first electrode assembly 100 or a second electrode assembly 200 may be expanded due to charging and discharging. Here, the negative electrode connecting part 320 or the positive electrode connecting part 310 may receive tensile force in a direction in which a length thereof extends, and this may lead to a damage. However, the negative electrode connecting part 320 or the positive electrode connecting part 310 of the electrode assembly set 10 according to an embodiment of the present invention may include a first folding part 312 and a second folding part 313 each having a shape in which a portion thereof is folded. Thus, when the volume of the first electrode assembly 100 or the second electrode assembly 200 is expanded, a shape of the folded portion of the first folding part 312 or the second folding part 313 may be changed as a folded angle is changed. Accordingly, the negative electrode connecting part 320 or the positive electrode connecting part 310 may be prevented from being damaged.

As the folded portion, the degree of folding, the arrangement shape, and the like of the first folding part 312 or the second folding part 313 are easily changed, the electrode assembly set 10 according to an embodiment of the present invention may be applied to the secondary battery 1 having various shapes.

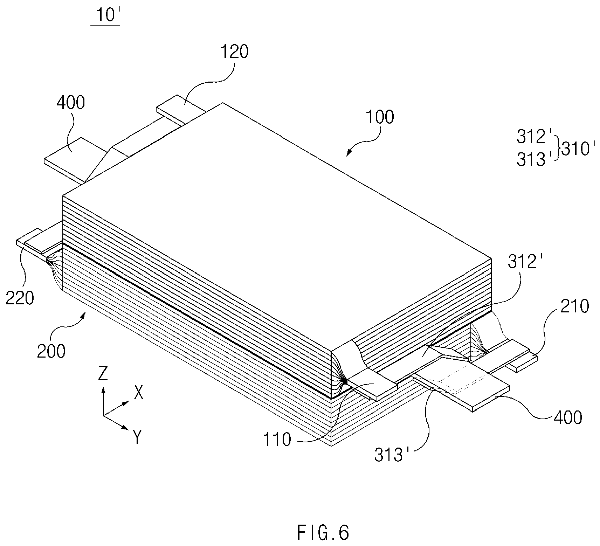

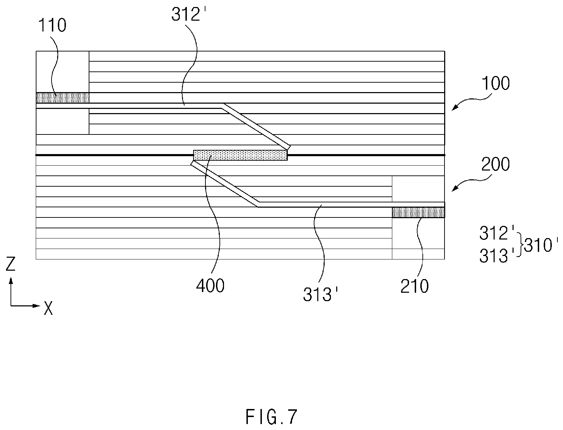

FIG. 6 is a perspective view of an electrode assembly set 10' according to another embodiment of the present invention. FIG. 7 is a front view of the electrode assembly set 10' according to another embodiment of the present invention.

The electrode assembly set 10' according to another embodiment of the present invention may include a connecting part having another shape. Specifically, a shape of a first folding part 312' or a second folding part 313' included in a negative electrode connecting part or a positive electrode connecting part 310' may be different, and the connecting part may electrically connect the electrode assemblies to each other via an electrode lead.

In this regard, the first folding part 312' according to another embodiment of the present invention may connect an electrode tab of one electrode assembly and an electrode lead 400 to each other. In addition, the second folding part 313' may connect an electrode tab of the other electrode assembly and the electrode lead 400 to each other. Here, the other electrode assembly may mean an electrode assembly adjacent to the one electrode assembly. In addition, the electrode tab of the one electrode assembly may be the first positive electrode tab 110 or the first negative electrode tab 120 of the first electrode assembly 100 described above, and the electrode tab of the other electrode assembly may be the second positive electrode tab 210 or the second negative electrode tab 220 of the second electrode assembly 200 described above.

The positive electrode connecting part 310' will be described as follows as an example. The first folding part 312' of the positive electrode connecting part 310' may have one portion connected to the first positive electrode tab 110, and the other portion connected to the electrode lead 400. Specifically, one end of the first folding part 312' may be connected to an upper portion or a lower portion of the first positive electrode tab 110, and the other end thereof may be connected to one end of the electrode lead 400. In addition, the second folding part 313' of the positive electrode connecting part 310' may have one portion connected to the second positive electrode tab 210, and the other portion connected to the electrode lead 400. Specifically, one end of the second folding part 313' may be connected to the other end of the electrode lead 400, and the other end thereof may be connected to an upper portion or a lower portion of the second positive electrode tab 210. Thus, as described above, the first folding part 312' and the second folding part 313' of the connecting part may electrically connect the electrode assemblies to each other via the electrode lead.

Referring to FIG. 6, unlike the connecting part 300 according to an embodiment of the present invention, the connecting part according to another embodiment of the present invention does not include the lead connecting part 311 to which the electrode lead 400 is attached. That is, the connecting part may have a shape in which the electrode lead 400 is connected directly to the first folding part 312' and the second folding part 313'. Like the first folding part 312 and the second folding part 313 according to an embodiment of the present invention, each of the first folding part 312' and the second folding part 313' may have a shape in which a portion thereof is folded.

Referring to FIG. 7, for a structurally relatively stable change in shape, the first folding part 312' and the second folding part 313' may be arranged in an approximately point-symmetric shape with respect to the electrode lead 400. Here, the electrode lead 400 may be disposed approximately at a center based on a height direction of the electrode assembly (e.g., direction parallel to a Z axis) and a full-width direction of the electrode assembly (e.g., direction parallel to an X axis).

As the positive electrode connecting part 310' of the electrode assembly set 10' according to another embodiment of the present invention does not include the lead connecting part 311 to which the electrode lead 400 is attached, economic feasibility of the process may be improved.

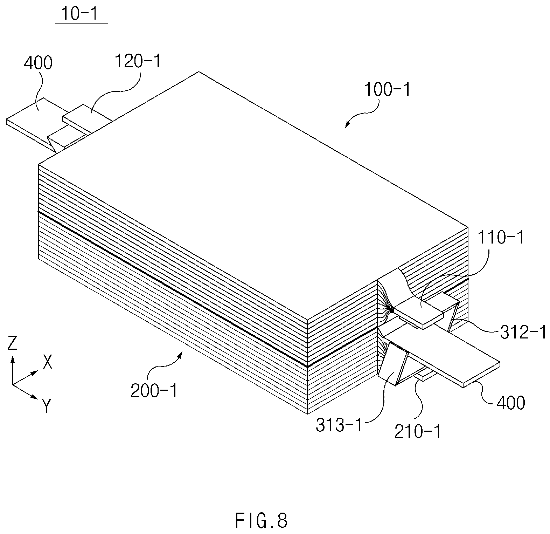

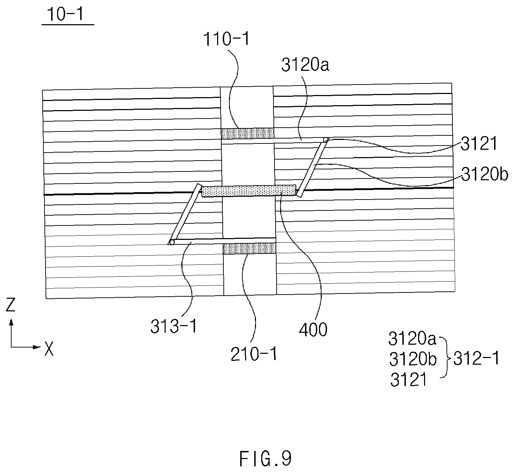

FIG. 8 is a perspective view of an electrode assembly set 10-1 according to still another embodiment of the present invention. FIG. 9 is a front view of the electrode assembly set 10-1 according to still another embodiment of the present invention.

The electrode assembly set 10-1 according to still another embodiment of the present invention may include a connecting part having another shape according to electrode tabs arranged in another shape. In addition, this embodiment may be different from the embodiments described above in terms of the feature in which a first folding part 312-1 includes separate members 3120a and 3120b and a joint 3121 for connecting the members 3120a and 3120b to each other.

Referring to FIG. 8, the electrode assembly of the electrode assembly set 10-1 according to still another embodiment of the present invention may be disposed so that a first positive electrode tab 110-1 and a second positive electrode tab 210-1 may protrude from a central portion in a width direction of one end of the electrode assembly, and a first negative electrode tab 120-1 and a second negative electrode tab 220-1 may protrude from a central portion in a width direction of the other end. Here, the electrode assembly may be each of the first electrode assembly 100-1 and the second electrode assembly 200-1.

Also in the electrode assembly set 10-1 according to still another embodiment of the present invention which includes the electrode assemblies in which the electrode tabs are disposed in a different shape from those of the other embodiments, a shape of a connecting part may be easily changed due to the first folding part 312-1 and a second folding part 313-1 each having a folded portion.

The first folding part 312-1 and the second folding part 313-1 may be connected to the lead connecting part 311 of the connecting part 300 according to an embodiment of the present invention, and may be connected directly to the electrode lead 400 in the same method as another embodiment of the present invention. When the latter is described as an example, in a positive electrode connecting part 310-1 connected to a positive electrode tab, the first folding part 312-1 may have one end connected to the first positive electrode tab 110-1, and the other end connected to one end of the electrode lead 400. In addition, the second folding part 313-1 may have one end connected to the other end of the electrode lead 400, and the other end connected to the second positive electrode tab 210-1. As above, even though the electrode assemblies are different in shape, the connecting part may be easily applied.

As an example of a configuration for an easy change in shape, in the connecting part according to still another embodiment of the present invention, the first folding part 312-1 and the second folding part 313-1 may be disposed at opposite positions. Specifically, the first folding part 312-1 may be disposed at one side of a central portion based on a width direction of the electrode assembly (e.g., direction parallel to an X axis), and the second folding part 313-1 may be disposed at the other side of the central portion based on the width direction of the electrode assembly (e.g., direction parallel to the X axis).

When the first folding part 312-1 and the second folding part 313-1 are disposed at the same side based on the central portion in the width direction of the electrode assembly, there is a concern that the first folding part 312-1 and the second folding part 313-1 affect each other during the change in shape. In addition, as both the first folding part 312-1 and the second folding part 313-1 are connected to the same portion of the electrode lead 400, there is a concern that stability is structurally reduced. Thus, as the first folding part 312-1 and the second folding part 313-1 according to still another embodiment of the present invention are disposed, respectively, at opposite sides of the central portion based on the width direction of the electrode assembly, the structural stability may be improved, and the shape may be easily changed.

Referring to FIG. 9, the first folding part 312-1 according to still another embodiment of the present invention may include the members 3120a and 3120b and the joint 3121. Specifically, the members 3120a and 3120b of the first folding part 312-1 may be provided in plurality to be connected to each other to have a specific angle. In addition, the joint 3121 may be disposed between the plurality of members 3120a and 3120b, and be connected to the members 3120a and 3120b adjacent thereto to aid in movement of the members 3120a and 3120b. More specifically, each of the members 3120a and 3120b may have an approximately thin-plate shape, and the joint 3121 may have an approximately cylindrical shape. Thus, the two adjacent members 3120a and 3120b each having a thin-plate shape may be connected to be rotatable along a side surface of the joint 3121 having a cylindrical shape, and thus be moved so that an angle formed by the two members 3120a and 3120b is changed. Here, like the first folding part 312-1, the second folding part 313-1 may also include the members 3120a and 3120b and the joint 3121.

As the first folding part 312-1 or the second folding part 313-1 according to still another embodiment of the present invention includes the members 3120a and 3120b separated from each other, and the joint 3121, the movement thereof due to the swelling of the electrode assembly may be easier.

In various embodiments of the present invention, the case in which the electrode assembly set includes two electrode assemblies is described as an example. However, this is just an example, and the electrode assembly set may include three or more electrode assemblies. In a case in which the electrode assembly set includes three or more electrode assemblies, the number of the folding part, the shape of the connecting part, and the like may be changed.

Although the present invention has been described with reference to the limited embodiments and drawings, the present invention is not limited thereto and may be variously implemented by those of ordinary skill in the art to which the present invention pertains, within the technical idea of the present invention and an equivalent of the appended claims.

### [Description of the Symbols]

1: Secondary battery
10, 10', 10-1: Electrode assembly set
20: Battery case
100, 100-1: First electrode assembly
110, 110-1: First positive electrode tab
120, 120-1: First negative electrode tab
200, 200-1: Second electrode assembly
210, 210-1: Second positive electrode tab
220: Second negative electrode tab
300: Connecting part
310, 310', 310-1: Positive electrode connecting part
311: lead connecting part
312, 312', 312-1: First folding part
3120a, 3120b: Member
3121: Joint
313, 313', 313-1: Second folding part
320: Negative electrode connecting part
400: Electrode lead

## Claims

1. An electrode assembly set comprising:
a plurality of electrode assemblies comprising a plurality of negative electrodes, positive electrode, and separators; and
a connecting part configured to electrically connect the electrode assemblies to each other,
wherein the connecting part comprises a plurality of folding parts, each of which has a portion folded at a predetermined angle,
wherein the predetermined angle is changed so as to allow the electrode assemblies to move.

2. The electrode assembly set of claim 1, further comprising an electrode lead electrically connected to the electrode assemblies through the connecting part to extend in a direction that is away from the electrode assemblies.

3. The electrode assembly set of claim 2, wherein the connecting part comprises:
a lead connecting part to which the electrode lead is connected;
a first folding part configured to connect an electrode tab of one electrode assembly to the lead connecting part; and
a second folding part configured to connect an electrode tab of the other electrode assembly adjacent to the one electrode assembly to the lead connecting part,
wherein each of the first folding part and the second folding part has a shape in which a portion thereof is folded.

4. The electrode assembly set of claim 3, wherein the first folding part and the second folding part are arranged in a point-symmetric shape with respect to the lead connecting part.

5. The electrode assembly set of claim 2, further comprising:
a first folding part configured to connect an electrode tab of one electrode assembly to the electrode lead; and
a second folding part configured to connect an electrode tab of the other electrode assembly adjacent to the one electrode assembly to the electrode lead,
wherein each of the first folding part and the second folding part has a shape in which a portion thereof is folded.

6. The electrode assembly set of claim 5, wherein the first folding part and the second folding part are arranged in a point-symmetric shape with respect to the electrode lead.

7. The electrode assembly set of any one of claims 3 to 6, wherein at least one of the first folding part or the second folding part further comprises:
a plurality of members connected to each other to form a specific angle; and
a joint disposed between the plurality of members, and connected to the members adjacent thereto to aid in movement of the members.

8. The electrode assembly set of claim 1, wherein the plurality of electrode assemblies comprise:
a first electrode assembly; and
a second electrode assembly disposed on one side of the first electrode assembly in a thickness direction,
wherein, in the first electrode assembly, a first positive electrode tab protrudes from one side in a width direction of one end of the first electrode assembly, and a first negative electrode tab protrudes from the other side in a width direction of the other end, and
wherein, in the second electrode assembly, a second positive electrode tab protrudes from the other side in a width direction of one end of the second electrode assembly, and a second negative electrode tab protrudes from one side in a width direction of the other end.

9. The electrode assembly set of claim 8, wherein the connecting part comprises:
a negative electrode connecting part configured to electrically connect the first negative electrode tab and the second negative electrode tab to each other; and
a positive electrode connecting part configured to electrically connect the first positive electrode tab and the second positive electrode tab to each other.

10. The electrode assembly set of claim 1, wherein the electrode assembly is disposed so that a positive electrode tab protrudes from a central portion in a width direction of one end of the electrode assembly, and a negative electrode tab protrudes from a central portion in a width direction of the other end,
wherein the connecting part comprises:
a first folding part disposed at one side of the central portion based on a width direction of the electrode assembly; and
a second folding part disposed at the other side of the central portion based on the width direction of the electrode assembly.

11. A secondary battery comprising:
the electrode assembly set of any one of claims 1 to 10; and
a battery case in which the electrode assembly set is accommodated.

12. The electrode assembly set claim 1, wherein, in the connecting part, the predetermined angle is changed so as to allow the electrode assemblies to move in a thickness direction of the electrode assembly, and a width direction perpendicular to the thickness direction.

13. An electrode assembly set comprising:
an electrode assembly unit comprising a plurality of electrode assemblies;
an electrode lead is disposed so as to overlap a virtual plane passing a center of the electrode assembly unit in a stacking direction of the electrode assemblies; and
a connecting part configured to electrically connect each of the electrode assemblies and the electrode lead to each other,
wherein the connecting part comprises a plurality of folding parts, each of which has a portion folded at a predetermined angle,
wherein the predetermined angle is changed so as to allow the electrode assemblies to move
